# EUROPEAN PATENT SPECIFICATION

(11) **EP 2 826 696 B1**
(45) Date of publication and mention of the grant of the patent: **11.01.2017**
(21) Application number: 13177047.1
(22) Date of filing: 18.07.2013
(51) Int. Cl.: B62D 25/06, B60J 7/00

(54) **Fixation of a roof unit in a vehicle body**
Befestigung einer Dacheinheit in einer Fahrzeugkarosserie
Fixation d'une unité de toit dans la carrosserie d'un véhicule

(43) Date of publication of application: 21.01.2015
(73) Proprietor: Webasto SE, 82131 Stockdorf (DE)
(72) Inventor: Albert, Jean-Paul, 79700 Saint Pierre des Echaubrognes (FR)
(74) Representative: Epping - Hermann - Fischer

(56) References cited:
- WO-A1-2007/033747
- DE-A1- 10 249 417
- DE-A1- 10 355 656

## Description

The present invention relates to roof construction for a vehicle. Roof construction comprises a roof unit as well as the surrounding vehicle body, in which said roof unit is mounted during manufacturing. The roof unit can comprise a glass panel, fixed or movable.

Current manufacturing and design of vehicle are often based on the concept of a platform. A single platform is used for a plurality of specific vehicle versions: a sedan, an estate, a hatchback, a sport utility vehicle, SUV, convertible, etc. The different versions of the same platform share some comon elements, like engines, cockpits, seats, etc. From an industrial standpoint, the more the different versions share common element, the more the platform is cost effective.

Document DE 103 55 656 A1 describes a motor vehicle with a roof-supporting frame and an adaptor support which is mounted onto the roof-supporting frame for accommodating roof components. The adaptor support is assembled onto the roof-supporting frame of the motor vehicle.

Document DE 102 49 417 A1 discloses vehicle body element comprising elastic compensation elements arranged between an outer skin and a supporting frame of the vehicle body. The compensation elements are configured to enable shifting of the outer skin and the supporting frame.

However, each version has its specificities, among which the external contour and the roof height, which obviously differs between a sedan, a hatchback, a convertible, an estate, etc. Therefore, the roof unit is normaly specific to each version of the platform. The roof unit has a mechanical frame, in which each of its major component is mounted. The design of this frame is normally adjusted to fit each specific external gauge.

The main objective of the present invention is to have a roof unit which is not specific to each version anymore, but which is shared by at least two versions of the platform, and ideally by each vehicle version of a single platform. This is achieved by adjusting the vehicle body geometry to meet the specific external gauge of each version of the platform rather than adjusting the geometry of the frame of the roof unit.

Thus, the above and other objects are attained by a fixation means, in the form of a mounting interface, for mounting a roof unit on a vehicle body in a roof opening of said vehicle body, said roof unit comprising a frame, said vehicle body comprising elongated structural elements, like a front header, a rear header, and/or lateral structural supports, wherein said elongated structural elements surround said roof opening. This fixation means is characterised in that it has a vehicle portion, for fixation with the vehicle body at the level of an elongated structural element, and has a frame portion, for fixation with the frame, the distance between the vehicle portion and the frame portion defining the height of the roof unit in a specific vehicle. The frame is further configured for accommodation of functional elements of the roof unit to enable movement of a panel relative to the frame.

From the roof structure point of view, this invention mainly consists in a roof structure for a vehicle, comprising a roof unit with a frame, characterised in that said roof structure comprises at least one such interface, for mounting the roof unit in the roof opening of a vehicle body.

From the platform point of view, this invention also consists in a set of at least two specific vehicles of a common vehicle platform, said specific vehicles thereby sharing some identical fundamental modules, like engines, structures, vehicle body, and/or interior elements, etc., each specific vehicle having a specific top gauge to be fit by its roof, characterised in that the at least two specific vehicles have the same roof unit, particularly in term of frame design of said roof unit, but the vehicle body, on which said roof unit is mounted, is specific to the specific vehicle itself especially in the area where said roof unit is mounted on said vehicle body.

According to a first possible additional feature, the interface is made from a single foil of corresponding geometry. This leads to futher cost reduction, as such an interface is of a very simple design. The global manufacturing costs are much lower than with a plastic based interface, for example.

According to another possible additional feature, the frame portion has at least one flat surface for fixing the interface and the frame, so that in the roof structure, the the at least one interface and the frame are fixed to each other at at least one flat portion of the frame portion, which simplifies the glueing between the interface and frame.

According to another possible additional feature, the interface is to be integrated in an elongated structural element of the vehicle body and closes the cross section thereof, thereby reducing the required number of parts and manufacturing steps. Then, from the roof structure point of view, the at least one interface is integrated in an elongated structural element of the vehicle body, closing the cross section thereof.

According to another possible additional feature, the interface is to be fixed on an elongated structural element of the vehicle body having a closed cross section. With such a configuration, the design of the elongated structural element remains unchanged, and only a specific interface has to be redesigned for each specific version of the platform. From the roof structure point of view, the at least one interface is fixed on an elongated structural element of the vehicle body having a closed cross section.

According to another possible additional feature improving water tightness, the roof unit is fixed to the at least one interface with a glue line, continuously surrounding the roof opening.

According to another possible additional feature simplifying the manufacturing of the roof structure, the at least one interface is fixed by welding to the rest of the vehicle body portion.

According to a possible additional feature, the specific height of the roof unit is reached by a specific height of a fixation means for the roof unit, said fixation means being provided at the level of the vehicle body, particulary by the height of fixation surfaces of at least one interface.

In some further embodiments, the height of the closed cross section of a front header is specific for each specific vehicle, thereby defining a specific height of the roof unit for each specific vehicle.

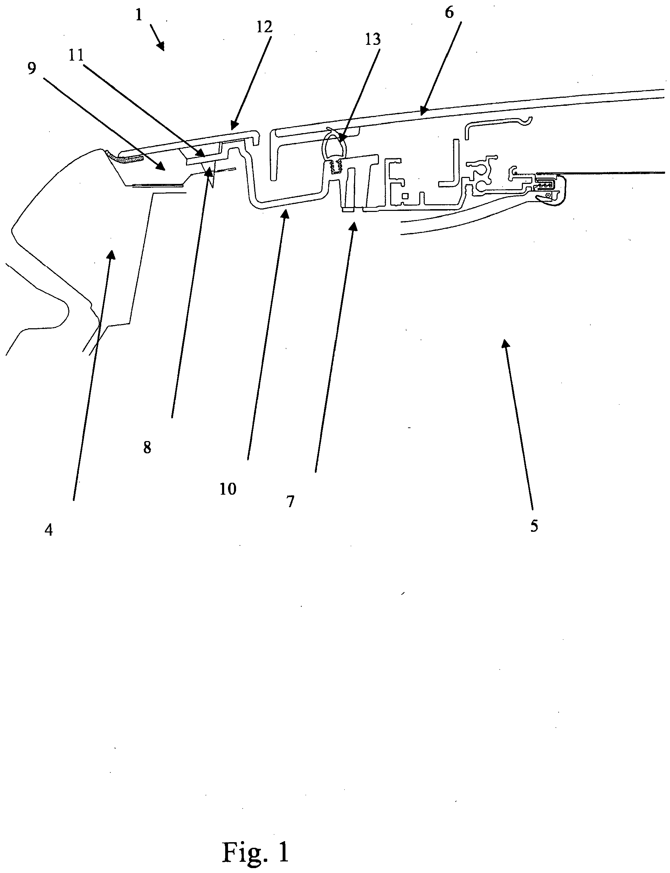

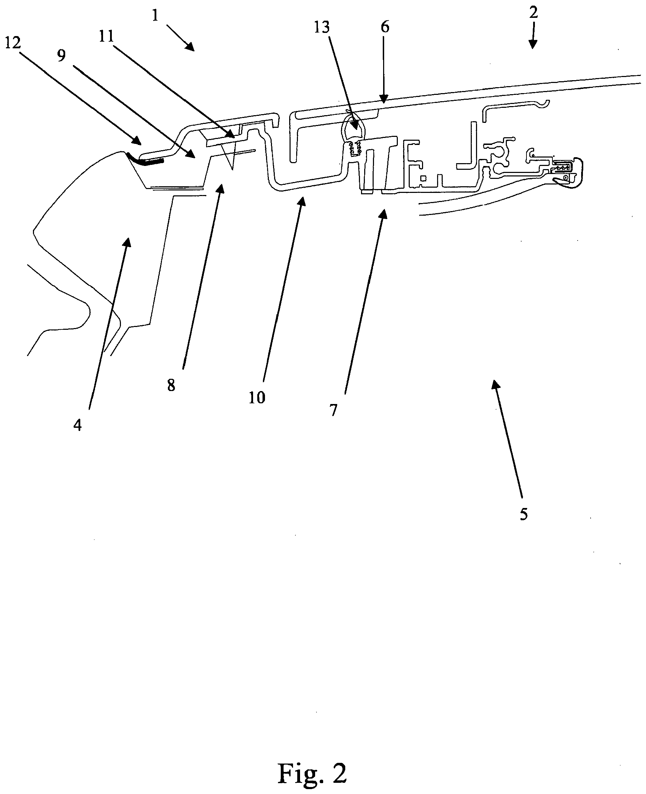

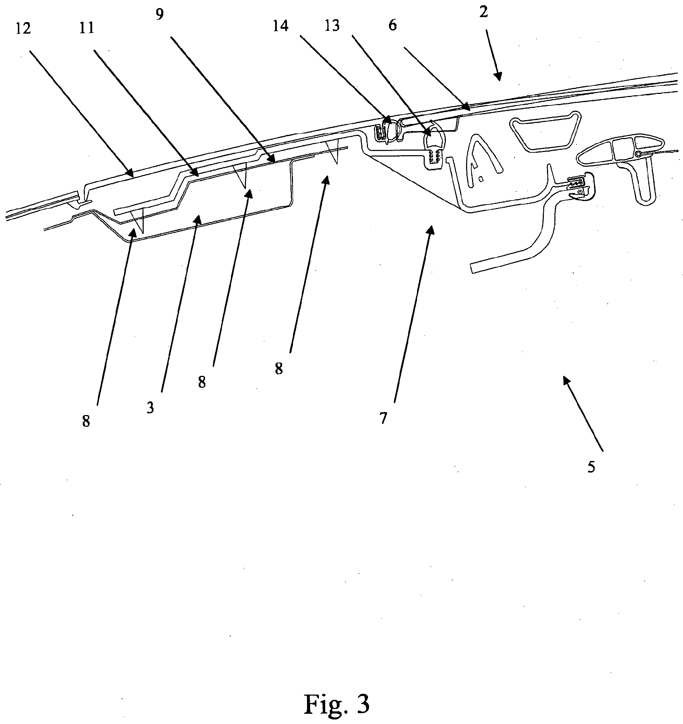

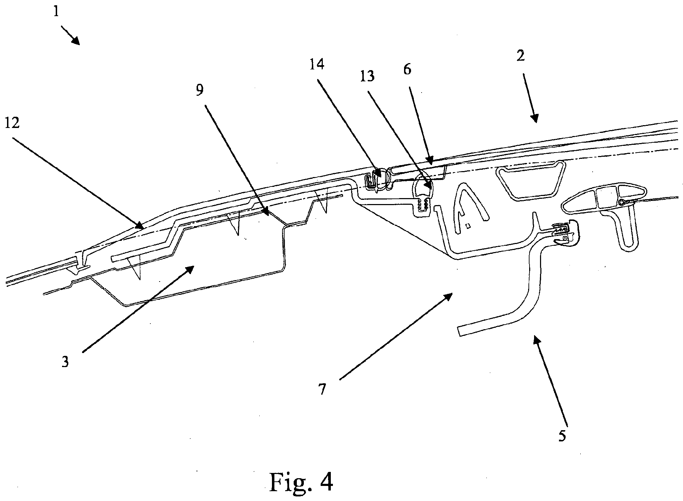

These and other objects, features and advantages of the present invention will become more apparent from the following description when taken in connection with the accompanying drawings which show, for purposes of illustration only one embodiment in accordance with the present invention. The four attached drawings correspond to two different versions of a single platform. Figures 1 and 3 relate to the sedan version, and figures 2 and 4 relate to the station wagon version:
- figure 1 shows a longitudinal cross section for the sedan version;
- figure 2 shows a longitudinal cross section for the station wagon;
- figure 3 shows a transverse cross section for the sedan version, and
- figure 4 shows a transverse cross section for the station wagon.

The invention mainly consists in a fixation means, in the form of a mounting interface 9, for mounting a roof unit 5 on a vehicle body in a roof opening 2 of said vehicle body, said roof unit 5 comprising a frame 7, said vehicle body comprising elongated structural elements, like a front header 3, a rear header, and/or lateral structural supports 4, wherein said elongated structural elements surround said roof opening 2. Hence, the corresponding roof structure of a vehicle comprises the vehicle body and the roof unit 5, mounted on said vehicle body in the roof opening 2 thanks to at least one of such a fixation means or interface 9.

As shown in the attached figures, the vehicle body has a roof 1, in which a roof opening 2 of a closed contour or outline is arranged,. The roof opening 2 contour has two transversal edges: a front transversal edge, at the front side of the vehicle body and a rear transversal edge, at the rear side of the vehicle body. They each extand from the right handside of the vehicle to the left handside. The roof opening 2 contour also has two lateral edges, and the combination of the transversal edges and the lateral edges forms a globally rectangular shape for the roof opening 2.

At the front transversal edge of the roof opening 2, the vehicle body is provided with a front header 3. Similarly, a rear header can be located at the level of the rear transversal edge of the roof opening 2. Lateral structural supports 4 are also provided on the vehicle body at each lateral edges of the roof opening 2. The front header 3 has the shape of a transversal structural beam, with a closed cross section. The front header 3 works as a structural rigidifying element for the vehicle body. The shape of the front header 3, and especially the shape of its cross section, is designed in order to reach the expected mechanical properties for the vehicle body. The front header 3 approximately runs between the two lateral structural supports 4. The rear header and the front header 3 can be similar, so that the rear header also works as a strengthening element which further improves the mechanical properties of the vehicle body. The front header 3 is normally approximately located between the front screen and the roof of the vehicle.

A roof unit 5 is mounted on said vehicle body portion in the roof opening 2 thanks to the at least one interface 9, and closes said opening. According to the invention, the mounting interface 9 has a vehicle portion, for fixation with the vehicle body at the level of an elongated structural element, and has a frame portion, for fixation with the frame 7,
the distance between the vehicle portion and the frame portion defining the height of the roof unit 5 in a specific vehicle. The mounting interface 9 is adapted for each specific version of the platform, in order to define a specific height and vertical position of the roof unit 5, fixed to the vehicle body with the help of said interface 9.

In basic embodiments, the roof unit 5 simply mainly consists in a metallic panel, which completely closes the roof opening 2. In other embodiments, the roof unit 5 has a glass panel 6, which has ideally approximately the same surface than the roof opening 2.

The roof unit 5 also has a frame 7, thanks to which said roof unit 5 is fixed to the vehicle body. Therefore, the external contour of the frame 7 mainly corresponds to the internal contour of the roof opening 2. As will be described later, the frame 7 of the roof unit 5 is fixed to the at least one interface 9 with a glue line 8, continuously surrounding the roof opening 2.

The frame 7 works as a support structure for the roof unit 5. Hence, the glass panel 6 is mounted in said frame 7. It is evident that for such embodiments comprising a glass panel 6, the frame 7 should only surround the glass panel 6. The frame 7 then has a globally rectangular ring shape, placed between the vehicle body and the glass panel 6, along the edges of the roof opening 2.

The glass panel 6 can be fixed in the frame 7 or movable. In movable panel versions, the roof unit 5 has mechanical guiding means for the glass panel 6 as well as actuation means. Actuation means for the glass panel can comprise, for example, a handle or an electric motor and the corresponding mechanical elements required to transmit the movement to the glass panel 6. The glass panel 6 guiding means, the glass panel 6 actuation means and the required force transmission elements are all mounted in the frame 7 of the roof unit 5.

When the roof unit 5 has a glass panel 6, it can also have a shading screen located under said panel. This shading screen can normally have any position between a fully closed position and a fully open position. In the fully open position, it completely covers the glass panel 6, and light cannot be transmitted in the vehicle. In the fully closed position, light can freely go through the roof opening 2. The shading screen, as well as its guiding elements, are mounted in the frame 7. In some embodiments, the movement of the shading screen is controlled by an electric motor. Said electric motor is then also mounted as an element of the frame 7.

Hence, the major functional elements of the roof unit 5 are mounted in the frame 7: glass panel 6, its guiding, actuation and transmission means as well as the shading screen and its own guiding, actuation and transmission means. The frame 7 is the roof unit 5 base element in which the different functional means are installed and is the same for each specific vehicle of a platform.

The frame 7 is normally made by plastic injection molding,which leads to a reduced weight. Compared to metallic frames, designing and manufacturing the multiple mechanical supports required for the multiple added functional means is also easier and cheaper.

In the front zone of the vehicle body, the frame 7 is fixed directly on the front header 3. Similarly, in the rear zone of the vehicle body, the frame 7 can be fixed directly on the rear header. In the lateral zones of the vehicle body, the frame 7 is fixed to the lateral structural supports 4.

The current design of vehicles has lead to the development of a single common platform shared by a set of specific vehicule versions: station wagon, convertible, sedan, hatchback, etc. Each specific version has its specific outer global contour. However, the front screen and the front header 3 locations are normally the same for the different versions. The height of the header 3 from the bottom of the vehicle structure is usually the same for each vehicle of the platform, but the roof gauge is different and specific to each version.

In the state of the art, the frame 7 is then usually redesigned to fit the external gauge of each separate specific version of a single platform. The external gauge for the specific vehicle is different for each specific versions of a single platform: station wagon, sedan, hatchback, etc. Hence, as the frame 7 is injection molded, each specific version of a platform normally requires its specific frame mold. Therefore, cost efficiency is limited. Thanks to the present invention, cost is reduced because each specific vehicle of a single platform has the same frame 7. The frame 7 is not adapted to the specific vehicle of the platform anymore, but is a standard element for the platform, and is used for each specific vehicle of the platform. The tooling costs are consequently reduced. Therefore, the same roof unit 5 can be mounted on the vehicle body of each specific version of a single platform.

In other words, the geometrical variations from one vehicle of the platform to another one of the same platform are not located on the frame 7 but on the vehicle body itself. The differences between two vehicles of the same platform are located on metallic portions of the vehicle body, on which the frame 7 is fixed. A metallic portion of the vehicle body interface is geometrically adapted to each version of the platform rather than the frame 7 itself. The specific metallic portion is ideally fixed to the rest of the vehicle body by welding. It is therefore globally much cheaper to adapt such a metallic part to be welded on the rest of the vehicle body than to adapt the whole frame 7 and especially its corresponding mold.

The specific metallic portion works as an interface 9 between the frame 7 and the rest of the vehicle body as will be described later on, and can also be an element of an elongated structure element of the vehicle body itself. The geometry of this interface 9, and especially its own height or thickness, defines the final height of roof unit 5. In fact, a specific design of the interface 9 is used for each specific vehicle of the platform.

Figure 1 and 2 show the lateral zones of the roof opening 2. Figure 1 relates to the sedan version of the platform, whereas figure 2 relates to the station wagon of the platform. It should be noted that the glass panel 6 is slightly higher in the station wagon than in the sedan version. This is obtained by an interface 9, located between the vehicle body and the frame 7 of the roof unit 5, the shape of said interface 9 being specific to each version. In other words, the at least one interface 9 is fixed on an elongated structural element of the vehicle body having a closed cross section, preferably the interface 9 in the lateral area of the vehicle is fixed on the lateral structural support 4 with a closed cross section.

As can be seen in these figures, the lateral portion of the frame 7 has a bottom gutter 10 and a flange 11. This lateral portion is exactly the same in the station wagon version and in the sedan version. The flange 11 is fixed to a lateral structural support 4 thanks to the interface 9. Preferablly, the at least one interface 9 is made from a single foil of corresponding geometry. The interface 9 is here in the shape of a metallic panel. This metallic panel is deformed to have one flat extremity, named vehicle portion, fixed to the lateral structural support 4, and another flat extremity, named frame portion, fixed to the frame 7. In other words, the frame portion has at least one flat surface for fixing the interface 9 and the frame 7. The chosen offset between the two flat extremities depends on the desired specific height of the glass panel 6. Therefore, according to an advantageous feature, the at least one interface 9 and the frame 7 are fixed to each other at at least one flat portion of the frame portion.

The vehicle portion is fixed to the vehicle body by welding or bolts. The frame 7 is fixed to the frame portion by glueing, at the level of the flange 11. As will be described later on, the glue line 8 between the frame 7 and the frame portion of the lateral interface 9 completely surrounds the whole roof opening 2, for sealing purposes. Hence, the roof unit 5 is fixed to the at least one interface 9 with a glue line, continuously surrounding the roof opening 2, preferably at the level of flanges 11 of frame 7 of said roof unit 5. Preferably, the at least one interface 9 is fixed by welding to the rest of the vehicle body portion.

Figures 1 and 2 also show that the interface 9 is hidden by a cover 12. This cover 12 comes on the top of the flange 11. The design of the cover 12 is adapted to each specific vehicle version of the platform, as it has to fit the external top gauge of the vehicule, just like the glass panel 6. The comparison between figures 1 and 2 clearly shows that a specific interface 9 is designed to reach the desired specific height for the roof unit 5, especially for the glass panel 6, which should fit the external gauge of the specific vehicle. In the prior art, the lateral zone of the frame 7 would have been adapted in order to bring the glass panel 6 at its required height.

Figures 3 and 4 show the front zone of the roof opening 2. Figure 3 relates to the sedan version of the platform, whereas figure 4 relates to the station wagon version of the platform. The front header 3 itself is the portion of the vehicle body which slightly differs between the two versions. The bottom portion of the front header 3 is the same for the two versions, but the top portion is adapted to the specific version. The shape of this top portion of the front header 3 as well as its own height defines the specific height reached by the roof unit 5 once assembled.

As can be seen from the drawings, the at least one interface 9 is integrated in an elongated structural element of the vehicle body, closing the cross section thereof, preferably the interface 9 in the front area of the vehicle is integrated in the front header 3 of the vehicle body, closing the cross section of said front header 3. The top portion of the front header 3 closes said header so that it has a closed cross section. In the prior art, the section of the front header remains unchanged between the station wagon version and the sedan version. Here, the section of the front header 3 is adapted to the specific version of the platform. As already explained for the longitudinal views in figures 1 and 2, the gauge for a station wagon is higher than for a sedan version. Therefore, the top portion of the front header 3 in the station wagon version has a positive offset compared to the top portion of the front header 3 in the sedan version. Here, the top portion of the front header 3 works as the interface 9 between the roof unit 5 and the vehicle body. The bottom portion of the front header 3 has the global shape of a gutter, and is closed by the interface 9.

The top portion of the front header 3 works as the interface 9, and is geometrically adapted to the desired gauge for the specific vehicle version of the platform. Figures 3 and 4 show that the interface 9 is directly fixed to the front header 3. In the shown front area, the frame 7 also has a flange 11, for fixing said frame 7 to the vehicle body. Similarly to what has been described for the lateral fixation, the flange 11 of the frame 7 is fixed to the interface 9, the design of the latter being specifically adapted to the vehicle version of the platform. These two drawings show that even in the front area, the frame 7 of the roof unit 5 has the same design for the sedan version, figure 3, and for the station wagon version, figure 4.

As shown in the attached figures, the roof structure comprises a vehicle body portion having a roof opening 2 and also comprises a lateral interface 9, figures 1 and 2, mounted on the lateral structural support 4 and on which the frame 7 of the roof unit 5 is mounted. The roof structure also comprises a front interface 9, figures 3 and 4, mounted on the front header 3 and on which the frame 7 of the roof unit 5 is mounted. A flange 11 is present at the periphery of the frame 7 for fixing the latter to the interface 9. The interface 9 can have the same total length than the edge of the roof opening or can alternatively be shorter and have the shape of a simple fixation ear.

As can be seen from figures 3 and 4, the interface 9 is fixed to the rest of the front header 3 by welding at the level of two diametrically opposed lips. The frame 7 is fixed to the interface 9 in at least one flat portion. Preferably, the frame 7 is fixed to the interface 9 by three glue lines, arranged between the interface 9 and the flange 11 of the frame 7. Figures 3 and 4 show that the flange 11 and the interface 9 have complementary shapes, with three flat corresponding zones, dedicated to glueing the frame 7 on the interface 9. When assembled, the interface 9 and the flange 11 of the frame 7 are separated by the thickness of the compressed glue lines. These three flat portions are preferably not aligned, and a small offset is arranged between them. The central glue line continuously surrounds the roof opening 2, for water proofing purposes.

Figures 3 and 4 also show that the interface 9 is partly hidden by a front transversal cover 12, which slightly differs between the sedan version, figure 3, and the station wagon version, figure 4.

The roof unit 5 described can be directly adapted to embodiment with no glass panel 6. The fixations flanges 11 of the frame 7 can be the same than for the roof unit 5 comprising a glass panel 6. For roof units 5 without glass panel 6, a fully opaque panel, either from metal, plastic, composite, or else, closes the roof opening 2. The covers 12, lateral and/or transversal, can be directly integrated to the frame 7 in such opaque roof units 5.

Figures 3 and 4 also show that within the roof unit 5, a first seal 13 is provided between the glass panel 6 and the frame 7. This first seal 13 is located at the periphery of the glass panel 6 and surrounds the central light transmission zone of the roof unit 5 in a continuous way, under said panel. Hence, the first seal 13 has the shape of a ring. These figures also show that a second seal 14 is provided between the front edge of the glass panel 6, and the front cover. The first seal 13 and the second seal 14 are compressed when the glass panel 6 is in the closed position.

While this description described only one embodiment in accordance with the present invention, it is understood that the same is not limited thereto but is susceptible of numerous changes and modifications as known to those skilled in the art. Therefore, the present invention is not limited to the details shown and described herein but also covers all such changes and modifications.

## Claims

1. Fixation means, in the form of a mounting interface (9), for mounting a roof unit (5) on a vehicle body in a roof opening (2) of said vehicle body, said roof unit (5) comprising a frame (7), said vehicle body comprising elongated structural elements, like a front header (3), a rear header, and/or lateral structural supports (4), wherein said elongated structural elements surround said roof opening (2)
**characterised in that**
said roof unit (5) comprises a panel which is relatively moveable to the frame (7) and the frame (7) is configured to accommodate functional elements of the roof unit (5),
said mounting interface (9) has a vehicle portion, for fixation with the vehicle body at the level of an elongated structural element, and has a frame portion, for fixation with the frame (7),
the distance between the vehicle portion and the frame portion defining the height of the roof unit (5) in a specific vehicle.

2. Fixation means according to claim 1, **characterised in that** the interface (9) is made from a single foil of corresponding geometry.

3. Fixation means according to any of claim 1 or 2, **characterised in that** the frame portion has at least one flat surface for fixing the interface (9) and the frame (7).

4. Fixation means according to any of claim 1 to 3, **characterised in that** the interface (9) is to be integrated in an elongated structural element of the vehicle body and closes the cross section thereof.

5. Fixation means according to any of claim 1 to 4, **characterised in that** the interface (9) is to be fixed on an elongated structural element of the vehicle body having a closed cross section.

6. Roof structure for a vehicle, comprising a roof unit (5) with a frame (7), **characterised in that** it comprises at least one interface (9) according to any of claim 1 to 5 for mounting the roof unit (5) in the roof opening (2) of a vehicle body.

7. Roof structure according to claim 6, **characterised in that** the at least one interface (9) and the frame (7) are fixed to each other at at least one flat portion of the frame portion.

8. Roof structure according to claim 6 or 7, **characterised in that** the roof unit (5) is fixed to the at least one interface (9) with a glue line, continuously surrounding the roof opening (2).

9. Roof structure according to any of claim 6 to 8, **characterised in that** it comprises a vehicle body portion having a roof opening (2) and comprising elongated structural elements, like a front header (3), a rear header, and/or lateral structural supports (4), wherein said elongated structural elements surround said roof opening (2), the roof unit (5) being mounted on said vehicle body portion in the roof opening (2) thanks to the at least one interface (9).

10. Roof structure according to claim 9, **characterised in that** the at least one interface (9) is integrated in an elongated structural element of the vehicle body, closing the cross section thereof.

11. Roof structure according to claim 9 or 10, **characterised in that** the at least one interface (9) is fixed on an elongated structural element of the vehicle body having a closed cross section.

12. Roof structure according to any of claim 9 to 11, **characterised in that** the at least one interface (9) is fixed by welding to the rest of the vehicle body portion.

13. Set of at least two specific vehicles of a common vehicle platform, said specific vehicles thereby sharing some identical fundamental modules, like engines, structures, vehicle body, and/or interior elements, etc., each specific vehicle having a specific top gauge to be fit by its roof, **characterised in that**
the at least two specific vehicles comprise a roof structure according to one of the claims 6 to 12 and have the same roof unit (5), particularly in term of frame (7) design of said roof unit (5), but the vehicle body, on which said roof unit (5) is mounted, is specific to the specific vehicle itself especially in the area where said roof unit (5) is mounted on said vehicle body.

14. Set as defined in claim 13, **characterised in that** the specific height of the roof unit (5) is reached by a specific height of a fixation means for the roof unit (5), said fixation means being provided at the level of the vehicle body, particulary by the height of fixation surfaces of at least one interface (9).

15. Set as defined in either claim 13 or claim 14, **characterised in that** the height of the closed cross section of a front header (3) is specific for each specific vehicle, thereby defining a specific height of the roof unit (5) for each specific vehicle.

## Patentansprüche

1. Befestigungsmittel, in der Form einer Montageschnittstelle (9), zur Montage einer Dacheinheit (5) an einer Fahrzeugkarosserie in einer Dachöffnung (2) der Fahrzeugkarosserie, wobei die Dacheinheit (5) einen Rahmen (7) umfasst, wobei die Fahrzeugkarosserie länglich gestreckte Strukturelemente umfasst, wie eine vordere Kopfleiste (3), eine hintere Kopfleiste und/oder seitliche Strukturträger (4), wobei die länglich gestreckten Strukturelemente die Dachöffnung (2) umgeben,
**dadurch gekennzeichnet, dass**
die Dacheinheit (5) ein Paneel umfasst, welches relativ zum Rahmen (7) beweglich ausgebildet ist, und der Rahmen (7) dazu ausgebildet ist, Funktionselemente der Dacheinheit (5) aufzunehmen,
die Montageschnittstelle (9) einen Fahrzeugabschnitt zur Befestigung an der Fahrzeugkarosserie auf der Höhe eines länglich gestreckten Strukturelements aufweist und einen Rahmenabschnitt zur Befestigung am Rahmen (7) aufweist, wobei der Abstand zwischen dem Fahrzeugabschnitt und dem Rahmenabschnitt die Höhe der Dacheinheit (5) in einem bestimmten Fahrzeug definiert.

2. Befestigungsmittel nach Anspruch 1, **dadurch gekennzeichnet, dass** die Schnittstelle (9) aus einer einzigen Folie mit entsprechender Geometrie hergestellt ist.

3. Befestigungsmittel nach einem der Ansprüche 1 oder 2, **dadurch gekennzeichnet, dass** der Rahmenabschnitt wenigstens eine flache Fläche zum Befestigen der Schnittstelle (9) und des Rahmens (7) aufweist.

4. Befestigungsmittel nach einem der Ansprüche 1 bis 3, **dadurch gekennzeichnet, dass** die Schnittstelle (9) in ein länglich gestrecktes Strukturelement der Fahrzeugkarosserie zu integrieren ist und dessen Querschnitt schließt.

5. Befestigungsmittel nach einem der Ansprüche 1 bis 4, **dadurch gekennzeichnet, dass** die Schnittstelle (9) an einem länglich gestreckten Strukturelement der Fahrzeugkarosserie zu befestigen ist, das einen geschlossenen Querschnitt aufweist.

6. Dachkonstruktion für ein Fahrzeug, welche eine Dacheinheit (5) mit einem Rahmen (7) umfasst, **dadurch gekennzeichnet, dass** sie wenigstens eine Schnittstelle (9) nach einem der Ansprüche 1 bis 5 zur Montage der Dacheinheit (5) in der Dachöffnung (2) einer Fahrzeugkarosserie umfasst.

7. Dachkonstruktion nach Anspruch 6, **dadurch gekennzeichnet, dass** die wenigstens eine Schnittstelle (9) und der Rahmen (7) an wenigstens einem flachen Abschnitt des Rahmenabschnitts aneinander befestigt sind.

8. Dachkonstruktion nach Anspruch 6 oder 7, **dadurch gekennzeichnet, dass** die Dacheinheit (5) an der wenigstens einen Schnittstelle (9) mit einem Kleberstrang befestigt ist, der die Dachöffnung (2) durchgehend umgibt.

9. Dachkonstruktion nach einem der Ansprüche 6 bis 8, **dadurch gekennzeichnet, dass** sie einen Fahrzeugkarosserieabschnitt umfasst, der eine Dachöffnung (2) aufweist und länglich gestreckte Strukturelemente umfasst, wie eine vordere Kopfleiste (3), eine hintere Kopfleiste und/oder seitliche Strukturträger (4), wobei die länglich gestreckten Strukturelemente die Dachöffnung (2) umgeben, wobei die Dacheinheit (5) auf dem Fahrzeugkarosserieabschnitt in der Dachöffnung (2) mittels der wenigstens einen Schnittstelle (9) montiert ist.

10. Dachkonstruktion nach Anspruch 9, **dadurch gekennzeichnet, dass** die wenigstens eine Schnittstelle (9) in ein lang gestrecktes Strukturelement der Fahrzeugkarosserie integriert ist, wobei sie dessen Querschnitt schließt.

11. Dachkonstruktion nach Anspruch 9 oder 10, **dadurch gekennzeichnet, dass** die wenigstens eine Schnittstelle (9) an einem lang gestreckten Strukturelement der Fahrzeugkarosserie befestigt ist, das einen geschlossenen Querschnitt aufweist.

12. Dachkonstruktion nach einem der Ansprüche 9 bis 11, **dadurch gekennzeichnet, dass** die wenigstens eine Schnittstelle (9) durch Schweißen am restlichen Teil des Fahrzeugkarosserieabschnitts befestigt ist.

13. Satz von wenigstens zwei bestimmten Fahrzeugen einer gemeinsamen Fahrzeugplattform, wobei diese bestimmten Fahrzeuge dadurch einige identische grundlegende Module gemeinsam haben, wie Kraftmaschinen, Strukturen, Fahrzeugkarosserie und/oder innere Elemente usw., wobei jedes bestimmte Fahrzeug ein bestimmtes oberes Maß aufweist, das von seinem ach eingehalten werden muss, **dadurch gekennzeichnet, dass**
die wenigstens zwei bestimmten Fahrzeuge eine Dachkonstruktion nach einem der Ansprüche 6 bis 12 umfassen und dieselbe Dacheinheit (5) aufweisen, insbesondere im Hinblick auf die Konstruktion des Rahmens (7) der Dacheinheit (5), jedoch die Fahrzeugkarosserie, auf welcher die Dacheinheit (5) montiert ist, für das bestimmte Fahrzeug selbst spezifisch ist, insbesondere in dem Bereich, wo die Dacheinheit (5) auf der Fahrzeugkarosserie montiert ist.

14. Satz wie in Anspruch 13 definiert, **dadurch gekennzeichnet, dass** die bestimmte Höhe der Dacheinheit (5) durch eine bestimmte Höhe eines Befestigungsmittels für die Dacheinheit (5) erreicht wird, wobei das Befestigungsmittel auf der Höhe der Fahrzeugkarosserie vorgesehen ist, insbesondere durch die Höhe von Befestigungsflächen wenigstens einer Schnittstelle (9).

15. Satz wie in entweder Anspruch 13 oder Anspruch 14 definiert, **dadurch gekennzeichnet, dass** die Höhe des geschlossenen Querschnitts einer vorderen Kopfleiste (3) für jedes bestimmte Fahrzeug spezifisch ist, wodurch eine bestimmte Höhe der Dacheinheit (5) für jedes bestimmte Fahrzeug definiert wird.

## Revendications

1. Moyen de fixation, sous la forme d'une interface de montage (9), pour monter une unité de toit (5) sur une carrosserie de véhicule dans une ouverture (2) de toit de ladite carrosserie de véhicule, ladite unité de toit (5) comprenant un cadre (7), ladite carrosserie de véhicule comprenant des éléments structurels allongés, comme une traverse avant (3), un traverse arrière, et/ou des supports de structure latéraux (4), lesdits éléments structurels allongés entourant ladite ouverture (2) de toit,
**caractérisé en ce que**
ladite unité de toit (5) comprend un panneau qui est mobile par rapport au cadre (7) et le cadre (7) est configuré pour loger des éléments fonctionnels de l'unité de toit (5),
ladite interface de montage (9) comporte une partie de véhicule, à fixer à la carrosserie du véhicule au niveau d'un élément structurel allongé, et comporte une partie de cadre, à fixer au cadre (7), la distance entre la partie de véhicule et la partie de cadre définissant la hauteur de l'unité de toit (5) dans un véhicule spécifique.

2. Moyen de fixation selon la revendication 1, **caractérisé en ce que** l'interface (9) est fabriquée à partir d'un seul feuillard à la géométrie correspondante.

3. Moyen de fixation selon la revendication 1 ou 2, **caractérisé en ce que** la partie de cadre comporte au moins une surface plane pour fixer l'interface (9) et le cadre (7).

4. Moyen de fixation selon l'une quelconque des revendications 1 à 3, **caractérisé en ce que** l'interface (9) doit être intégrée dans un élément structurel allongé de la carrosserie du véhicule et ferme la section transversale de celui-là.

5. Moyen de fixation selon l'une quelconque des revendications 1 à 4, **caractérisé en ce que** l'interface (9) doit être fixée sur un élément structurel allongé de la carrosserie du véhicule comportant une section transversale fermée.

6. Structure de toit pour un véhicule, comprenant une unité de toit (5) ayant un cadre (7), **caractérisée en ce qu'**elle comprend au moins une interface (9) selon l'une quelconque des revendications 1 à 5 pour monter l'unité de toit (5) dans l'ouverture (2) du toit d'une carrosserie de véhicule.

7. Structure de toit selon la revendication 6, **caractérisée en ce que** ladite interface (9) et le cadre (7) sont fixés l'une à l'autre au niveau d'au moins une partie plane de la partie de cadre.

8. Structure de toit selon la revendication 6 ou 7, **caractérisée en ce que** l'unité de toit (5) est fixée à ladite interface (9) avec une ligne de colle entourant de façon continue l'ouverture (2) du toit.

9. Structure de toit selon l'une quelconque des revendications 6 à 8, **caractérisée en ce qu'**elle comprend une partie de carrosserie de véhicule comportant une ouverture (2) de toit et comprenant des éléments structurels allongés, comme une traverse avant (3), un traverse arrière, et/ou des supports de structure latéraux (4), lesdits éléments structurels allongés entourant ladite ouverture (2) de toit, l'unité de toit (5) étant montée sur ladite partie de carrosserie de véhicule dans l'ouverture (2) de toit grâce à ladite interface (9).

10. Structure de toit selon la revendication 9, **caractérisée en ce que** ladite interface (9) est intégrée dans un élément structurel allongé de la carrosserie du véhicule et ferme la section transversale de celui-là.

11. Structure de toit selon la revendication 9 ou 10, **caractérisée en ce que** ladite interface (9) est fixée sur un élément structurel allongé de la carrosserie du véhicule comportant une section transversale fermée.

12. Structure de toit selon l'une quelconque des revendications 9 à 11, **caractérisée en ce que** ladite interface (9) est fixée par soudage au reste de la partie de carrosserie du véhicule.

13. Jeu d'au moins deux véhicules spécifiques ayant une plate-forme commune de véhicule, lesdits véhicules spécifiques partageant de ce fait certains modules fondamentaux identiques, comme les moteurs, les structures, la carrosserie du véhicule et/ou des éléments intérieurs, etc., chaque véhicule spécifique ayant un gabarit supérieur spécifique à installer par son toit,
**caractérisé en ce que** lesdits véhicules spécifiques comprennent une structure de toit selon l'une quelconque des revendications 6 à 12 et comportent la même unité de toit (5), en particulier en termes de conception du cadre (7) de ladite unité de toit (5), mais la carrosserie de véhicule, sur laquelle est montée ladite unité de toit (5), est spécifique au véhicule spécifique lui-même, en particulier dans la zone où ladite unité de toit (5) est montée sur ladite carrosserie de véhicule.

14. Jeu selon la revendication 13, **caractérisé en ce que** la hauteur spécifique de l'unité de toit (5) est atteinte à l'aide de la hauteur spécifique d'un moyen de fixation pour l'unité de toit (5), ledit moyen de fixation étant disposé au niveau de la carrosserie du véhicule, notamment à l'aide de la hauteur des surfaces de fixation de ladite interface (9).

15. Jeu selon la revendication 13 ou 14, **caractérisé en ce que** la hauteur de la section transversale fermée d'une traverse avant (3) est spécifique à chaque véhicule spécifique, définissant de ce fait une hauteur spécifique de l'unité de toit (5) pour chaque véhicule spécifique.
